# EUROPEAN PATENT APPLICATION

(11) **EP 2 965 675 A1**
(43) Date of publication of application: **13.01.2016**
(21) Application number: 14760014.2
(22) Date of filing: 27.02.2014
(51) Int. Cl.: A47J 43/24, A47J 43/28

(54) **CONTAINER SUPPLEMENTATION UTENSIL, FILTER SUPPLEMENTATION UTENSIL, AND FILTERING METHOD**

(30) Priority: 07.03.2013 JP 2013065063; 11.11.2013 JP 2013232752
(71) Applicant: Katsumaru, Koji, Okinawa 900-0031 (JP)
(72) Inventor: Katsumaru, Koji, Okinawa 900-0031 (JP)
(74) Representative: Isarpatent
(86) International application number: PCT/JP2014/054870
(87) International publication number: WO 2014/136647

(57) **Abstract**

[Abstract] A dividing utensil (1) which is an example of a container aid utensil to which the present invention is applied includes a base (2) and an outer piece portion (3). Also, the base (2) and the outer piece portion (3) are coupled by a coupling portion (4). The base (2) is, when attached to a container, located in a space in the interior of the container, and forms a space for filtration in the interior of the container. Also, the base (2) also serves as a part that retains an object such as miso. Also, an end portion of the base (2) facing the outer piece portion (3) serves as a base outer edge portion (5).

## Description

### Technical Field

The present invention relates to a container aid utensil, a filtration aid utensil, and a filtering method. In detail, the present invention relates to a container aid utensil, a filtration aid utensil, and a filtering method which allow efficiently performing a filtering operation and the like and are easy to use.

### Background Art

A filtering operationmeans an operation to separate a solid and a liquid or the like using a porous body having pores for a mixture such as a liquid containing a solid. Filtering operations have been used in science experiments and chemical industries and have also been performed in daily life.

As a filtering operation in daily life, for example, an operation for making coffee using a paper filter is also a type of filtration. Also, filtering operations are often performed also in the process of cooking, and operations such as draining water from washed rice and draining hot water from noodles correspond thereto.

Here, the operation such as draining water from washed rice is commonly performed by hand work or a method using a container having holes such as a strainer. But, when a large quantity of objects are filtered, hand work is poor inefficiency, and outflow of rice, noodles, or the like cannot be sufficiently prevented in some cases. Also, even if a container having holes such as a strainer is used, objects more than the capacity of the container cannot be filtered, and the efficiency is still poor.

Under such circumstances, a container aid utensil exists that intends to improve the efficiency of a filtering operation at the time of draining water from washed rice, and for example, a container aid utensil described in, for example, Patent Literature 1 has been proposed.

Here, in Patent Literature 1, a container aidutensil 100 as shown in Fig. 12 is disclosed. The container aid utensil 100 is constructed of a semicircular-shaped elastic base 102 having elasticity provided with a large number of vertical drainage holes 101.

Also, at a back face of the elastic base 102, a hook-type locking tool 104 that can sandwich an upper portion of a side face of a container 103 to serve as a target of attachment is provided. Also, after attachment to the container 103, an appropriate space is formed between the elastic base 102 and the container 103.

In the container aid utensil 100, rice is received at the region of the elastic base 102, and water is discharged from the vertical drainage holes 101. Also, the water to be discharged flows toward the space formed between the elastic base 102 and the container 103.

### Citation List

### Patent Literature

Patent Literature 1: Japanese Published Unexamined Patent Application No. 2006-68268

### Summary of Invention

### Technical Problem

However, the container aid utensil described in Patent Literature 1 is structured to be supported by only the elastic force of the elastic base and a sandwiching force of the hook-type locking tool. Therefore, a supporting force of the container aid utensil is insufficient, and there is a concern of coming-off when the container is greatly inclined and a pressing force due to the weight of a large quantity of rice is applied.

Also, the space formed between the elastic base and container is narrow, which therefore does not mean one in which a space necessary for filtration has been sufficiently secured. When it is intended to discharge a large quantity of water, the discharge of water is not sufficient enough, water may flood toward the interior side of the container, and rice may possibly flow out.

Also, it can also be considered that, due to repeated use, the hook-type locking tool is worn out, and cannot sufficiently sandwich the container.

Also, in the container aid utensil described in Patent Literature 1, a structure has also been proposed for which a suction pad is provided on the back face of the elastic base in place of the hook-type locking tool, but even if the structure of supporting by a suction pad is adopted, the foregoing inconveniences similarly occur.

Further, when it is intended to increase the space necessary for filtration with the structure of the container aid utensil described in Patent Literature 1, the necessity for increasing not only the elastic base but also the hook-type locking tool or suction pad arises. As a result, attachment and detachment of the utensil becomes troublesome, and cleaning after use or the like also requires time and effort.

The present invention has been made in view of the problems described above, and it is an object of the present invention to provide a container aid utensil, a filtration aid utensil, and a filtering method which allow efficiently performing a filtering operation and the like and are easy to use.

### Solution to Problem

In order to achieve the above-described object, a container aid utensil of the present invention includes a first member having an outer edge portion being in a shape that conforms to an inner side face of a target container and formed with a hole, a second member coupled to the first member, extending at least inpart ina direction of a substantially central portion of the outer edge portion, and having an edge portion facing at least a part of the outer edge portion and being approachable to and separable from the outer edge portion, and a sandwiching portion located in the edge portion and formed with a distance with the outer edge portion shorter than a distance between the inner side face of the target container and an outer side face of an opposite side of the inner side face.

Here, the outer edge portion being in a shape that conforms to an inner side face of a target container can make a clearance unlikely to occur between the first member and the inner side face of the container. For example, a filter cake becomes unlikely to flow out during a filtering operation.

Also, the first member having an outer edge portion being in a shape that conforms to an inner side face of a target container and the second member coupled to the first member, extending at least in part in a direction of a substantially central portion of the outer edge portion, and having an edge portion facing at least a part of the outer edge portion make it possible to attach the container aid utensil to the target container. That is, it becomes possible to make a region where the first member and the second member are coupled be caught on a side-face upper portion of the target container so as to support the container aid utensil. Further, the side face of the target container is sandwiched between the outer edgeportion and the edge portion, so that the container aid utensil is fixed to the target container.

Also, the second member extending at least in part in a direction of a substantially central portion of the outer edge portion makes it easy to make the second member to follow an outer peripheral surface of the container side face. That is, for example, when the container aid utensil is attached to a container having a substantially circular outer peripheral surface, the second member can be made to follow a curved surface on its circumference, so that stability when the container aid utensil is attached can be increased.

Also, the edge portion being approachable to and separable from the outer edge portion makes it easy to attach the container aid utensil to the target container. That is, by separating the outer edge portion and the edge portion from a state in which these are approached before attachment to the container, a space when sandwiching the container side face can be formed large.

Also, the first member having an outer edge portion being in a shape that conforms to an inner side face of a target container and the second member coupled to the first member and having an edge portion facing at least a part of the outer edge portion can form a space for a filtering operation in the target container. That is, by the container aid utensil being attached to the target container and the first member being located in conformity with the inner side face of the container, a space to secure a filter cake and a space to discharge a filtrate can be separated at the first member serving as a boundary. Further, a space to retain an obj ect in a container can be formed in the container. That is, a space is formed between the container side face and the first member using the first member as a boundary. For example, making miso be retained in this space within a container containing hot water allows serving as a miso strainer. In addition, the space for a filtering operation mentioned here means both of a space in which a filter cake is secured and a space from which a filtrate is discharged.

Also, the first member formed with a hole makes it possible to discharge a filtrate. That is, there is provided a structure in which a filtrate flows out through the hole during a filtering operation.

Also, the first member having an outer edge portion being in a shape that conforms to an inner side face of a target container and the sandwichingportion located in the edge portion and formed with a distance with the outer edge portion shorter than a distance between the inner side face of the target container and an outer side face of an opposite side of the inner side face can make a filter cake unlikely to flow out. That is, the side face of the target container is securely sandwiched between the outer edge portion and the edge portion at the position of the sandwiching portion, so that a clearance becomes unlikely to occur between the container and the first member. Further, it becomes possible to tightly attach the container aid utensil to the target container. That is, from an original shape, positional misalignment of the outer edge portion and the edge portion occurs, and a restoring force for return acts, so that the side face of the target container is sandwiched.

Also, the first member having an outer edge portion being in a shape that conforms to an inner side face of a target container, the second member coupled to the first member and having an edge portion facing at least a part of the outer edge portion, and the sandwiching portion located in the edge portion and formed with a distance with the outer edge portion shorter than a distance between the inner side face of the target container and an outer side face of an opposite side of the inner side face make it possible to tightly attach the container aid utensil to the target container. For example, when attaching the container aid utensil to perform a filtering operation, the container aid utensil is attached such that the height position in a horizontal view of the outer edge portion at a position corresponding to the sandwiching portion becomes lower than the sandwiching portion.

In this case, when the target container is inclined to perform filtration, onto the first member changed in shape due to attachment to the container, the weight of a filter cake acts as a pressing force so as to return the first member to an original shape. That is, the pressing force of the filter cake is added to the force to sandwich the side face of the target container, and as a result, the container aid utensil becomes unlikely to come off during the filtering operation.

Also, when the first member is disposed inclined from the inner side face of the target container toward a central side and a rim portion side of the target container, the space in the interior of the target container is divided by the first member, so that a space for filtration can be formed large.

Also, when the outer edge portion and a peripheral region of the outer edge portion are formed of an elastic material, the outer edge portion becomes likely to be deformed in line with the shape of the inner side face of the target container, which allows having a structure in which a filter cake is still more unlikely to flow out. Further, the container aid utensil becomes usable for containers having a wider variety of side face shapes.

Also, when a region where the first member and the second member are coupled is formed of an elastic material, the range of motion of the first member with respect to the second member during attachment increases, and it becomes even easier to attach the container aid utensil to the target container.

Also, when the edge portion has a dimple portion formed in a direction of an opposite side to the first member or a projecting portion projecting in a direction of the first member side in a region that is in contact with an upper end of a side face of the target container, by making the dimple portion or the projecting portion be caught on the upper end of the container side face, stability when the container aid utensil is attached to the target container can be increased. That is, for example, making the dimple portion or the projecting portion be caught on a container having a stepped rim at the upper end of a container side face allows making the container aid utensil unlikely to come off even when the weight of a filter cake is applied during filtration. In addition, here, the dimple portion means a part that is fitted on the stepped rim from above, and the projecting portion means a part that abuts against the stepped rim from below.

Also, when the second member is formed at an interval from the outer edge portion, it becomes easy to attach the container aid utensil to the target container. That is, simply passing an upper end part of the container side face through a region formed with the interval and pushing the first member in a direction of a bottom face of the container makes it possible to easily attach the utensil.

Also, when the second member is coupled to the first member with the edge portion and the outer edge portion being continuous, and a closed gap portion is formed between the edge portion and the outer edge portion, the first member and the second member have a shape in which these are completely connected, so that the strength of the container aid utensil can be improved.

Also, when the sandwiching portions are formed at substantially symmetrical positions having predetermined distances from a position of the edge portion corresponding to a substantially central portion of the outer edge portion being a startingpoint, a gap in the vicinity of the substantially central portion of the outer edge portion with the edge portion is formed wide. As a result, simply passing an upper end part of the container side face through the part of a wide gap and pushing the first member in a direction of a bottom face of the container makes it possible to easily attach the utensil.

Also, when the first member is formed with a distance between one face of the outer edge portion of the first member and the other face being an opposite side of the one face narrower than a distance between one face of an inside region of the outer edge portion of the first member and the other face being an opposite side of the one face, the modulus of elasticity of the outer edge portion drops as compared with that of a region inside thereof. That is, the outer edge portion becomes likely to be deformed in line with the shape of the inner side face of the target container, which allows having a structure in which a filter cake is still more unlikely to flow out. Further, the container aid utensil becomes usable for containers having a wider variety of side face shapes.

Also, when the second member is coupled with the first member, located on substantially an identical plane to that of the first member, the container aid utensil as a whole has a substantially flat structure. As a result, the utensil is reduced in volume to attain a form that is convenient for carrying.

Also, when the first member, the second member, and the sandwichingportionare formed to be substantially identical in one face and the other face being an opposite side of the one face, the container aid utensil has substantially identical shapes at its front and rear. That is, the container aid utensil becomes usable with either face up. Also, because both front and rear faces are usable, the durability of the container aid utensil can be improved.

Also, when the first member is formed with a notch from near a position where the first member is coupled with the second member into a direction of an opposite side to the second member, the range of motion in the periphery of a region of the first member formed with a notch increases, and it becomes even easier to attach the container aid utensil to the target container.

Also, when the first member is formed to be bendable from a substantially central region being a starting point, and at least the part of the outer edge portion is located in contact with the edge portion facing the same, it becomes possible to sandwich the side face of the target container by the region where the outer edge portion and the edge portion are in contact.

Also, when the first member is formed to be bendable from a substantially central region being a starting point, the outer edge portion becomes likely to be deformed in line with the shape of the inner side face of the target container, which allows having a structure in which a filter cake is still more unlikely to flow out. Further, the container aid utensil becomes usable for containers having a wider variety of side face shapes.

Also, when the second member is coupled to facing regions on the first member, and has a gap between end portions thereof, and the sandwiching portion is formed in the endportion of the second member, the end portion of the second member is caught on a side-face upper end of the target container for attachment, which can facilitate attaching the container aid utensil to the container.

Also, in order to achieve the above-described obj ect, a filtration aid utensil of the present invention includes an elastic base having an outer edge portion being in a shape that conforms to an inner side face of a target container and formed with a large number of holes, and an elastic member having an edge portion facing the outer edge portion of the elastic base and coupled to the elastic base with both ends of the outer edge portion and both ends of the edge portion being continuous to form a closed gap portion between the outer edge portion and the edge portion, and further, with a distance between a substantially central portion of the outer edge portion and a substantially central portion of the edge portion shorter than a distance between the inner side face of the target container and an outer side face of an opposite side of the inner side face.

Here, the outer edge portion being in a shape that conforms to an inner side face of a target container can make a clearance unlikely to occur between the elastic base and the inner side face of the container. For example, a filter cake becomes unlikely to flow out during a filtering operation.

Also, the elastic base having an outer edge portion being in a shape that conforms to an inner side face of a target container and the elastic member having an edge portion facing the outer edge portion of the elastic base and coupled to the elastic base with both ends of the outer edge portion and both ends of the edge portion being continuous to form a closed gap portion between the outer edge portion and the edge portion can forma space for a filtering operation in the target container. That is, by the filtration aid utensil being attached to the target container and the elastic member being located in conformity with the inner side face of the container, a space to secure a filter cake and a space to discharge a filtrate can be separated at the elastic member serving as a boundary.

Also, the elastic base having an outer edge portion being in a shape that conforms to an inner side face of a target container and the elastic member having an edge portion facing the outer edge portion of the elastic base and coupled to the elastic base with both ends of the outer edge portion and both ends of the edge portion being continuous, and with a distance between a substantially central portion of the outer edge portion and a substantially central portion of the edge portion shorter than a distance between the inner side face of the target container and an outer side face of an opposite side of the inner side face can make a filter cake unlikely to flow out. That is, the side face of the target container is securely sandwiched between the outer edge portion and the edge portion at the position where the distance between the outer edge portion and the edge portion is shorter than the distance of the container side face, so that a clearance becomes unlikely to occur between the container and the elastic base. Further, it becomes possible to tightly attach the filtration aid utensil to the target container. Thatis,fromthe originalshape,positional misalignment of the outer edge portion and the edge portion occurs, and a restoring force for return acts, so that the side face of the target container is sandwiched.

Also, when the elastic base has an inclined face where a distance between one face in a vicinity of the outer edge portion of the elastic base and the other face being an opposite side of the one face is narrowed toward the outer edge portion, the modulus of elasticity of the outer edge portion drops as compared with that of a peripheral region thereof. That is, the outer edge portion becomes likely to be deformed in line with the shape of the inner side face of the target container, which allows having a structure in which a filter cake is still more unlikely to flow out.

Also, in order to achieve the above-described obj ect, a container aid utensil of the present invention includes a first member having an outer edge portion being in a shape that conforms to an inner side face of a target container and formed with a hole, and to be disposed on an inner side of the target container, a second member coupled to the first member, having an edge portion facing at least a part of the outer edge portion and being approachable to and separable from the outer edge portion, and a sandwiching portion located in the edge portion and formed with a distance with the outer edge portion shorter than a distance between the inner side face of the target container and an outer side face of an opposite side of the inner side face.

Here, due to the first member having an outer edge portion being in a shape that conforms to an inner side face of a target container and formed with a hole and to be disposed on an inner side of the target container, the space in the interior of the target container is divided by the first member, so that a space for filtration can be formed large.

Also, in order to achieve the above-described obj ect, a filtering method of the present invention includes a step of a filtration aid utensil being attached by sandwiching a first member having an outer edge portion being in a shape that conforms to an inner side face of a target container and formed with a hole at an inner side that conforms to the inner side face of the container and an outer side facing the inner side, disposed with a second member coupled to the first member, extending at least in part in a direction of a substantially central portion of the outer edge portion, and having an edge portion facing at least a part of the outer edge portion and being approachable to and separable from the outer edge portion, and inclining the target container in which a filtrate and a filter cake placed between the first member and a container bottom face are placed.

Here, as a result of a filtration aid utensil being attached by sandwiching a first member having an outer edge portion being in a shape that conforms to an inner side face of a target container and formed with a hole at an inner side that conforms to the inner side face of the container and an outer side facing the inner side, disposed with a second member coupled to the first member, extending at least in part in a direction of a substantially central portion of the outer edge portion, and having an edge portion facing at least a part of the outer edge portion and being approachable to and separable from the outer edge portion, the side face of the target container can be sandwiched from the inner and outer sides by the first member and the second member. That is, the filtration aid utensil can be made unlikely to come off to perform filtration.

Also, by the step of a filtration aid utensil having a first member formed with a hole being attached, and inclining the target container in which a filtrate and a filter cake placed between the first member and a container bottom face are placed, a filter cake can be retained in the interior of the target container by the first member, while a filtrate can be discharged from the hole to perform filtration.

### Advantageous Effects of Invention

As above, the container aid utensil according to the present invention allows efficiently performing a filtering operation and the like and is easy to use.

Also, the filtration aid utensil according to the present invention allows efficiently performing a filtering operation and the like and is easy to use.

Also, the filtering method according to the present invention allows efficiently performing a filtering operation and the like and is easy to use.

### Brief Description of Drawings

Fig. 1 is a schematic plan view of a dividing utensil.
Fig. 2 is a schematic plan view of a dividing utensil having a non-continuous edge portion.
Fig. 3 is a schematic plan view of a dividing utensil in which a substantially central portion of a base outer edge portion and an edge portion are approached.
Fig. 4 (a) is a schematic view of a state in which a dividing utensil 1 is attached to a container and Fig. 4 (b) is a schematic sectional view of that state viewed laterally.
Fig. 5 is a schematic sectional view of a state in which the container is inclined during a filtering operation viewed laterally.
Fig. 6(a) is a schematic plan view showing a dividing utensil for a substantially prism-shaped container and Fig. 6 (b) is a schematic view showing an attached state of the dividing utensil.
Fig. 7 (a) is a schematic plan view of a dividing utensil formed at its part to be caught with dimples and Fig. 7(b) is a schematic plan view of a dividing utensil formed at its part to be caught with projecting portions.
Fig. 8 (a) is a schematic view showing a pot having a stepped rim at a side-face upper end and Fig. 8 (b) is a schematic view showing a state in which a dividing utensil formed with dimples is attached.
Fig. 9 is a schematic view showing a dividing utensil having indented portions corresponding to container sandwiching portions.
Fig. 10 is a schematic view showing a dividing utensil having holes for washing a filter cake.
Fig. 11 is a schematic view showing a dividing utensil having a bendable base.

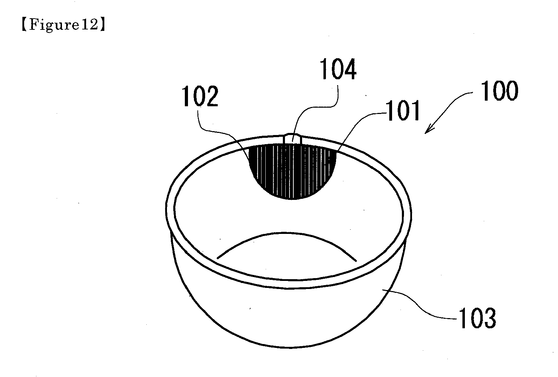

Fig. 12 is a schematic view showing a conventional container aid utensil.

### Description of Embodiments

Hereinafter, embodiments of the present invention will be described while referring to the drawings, and be used for understanding of the present invention.

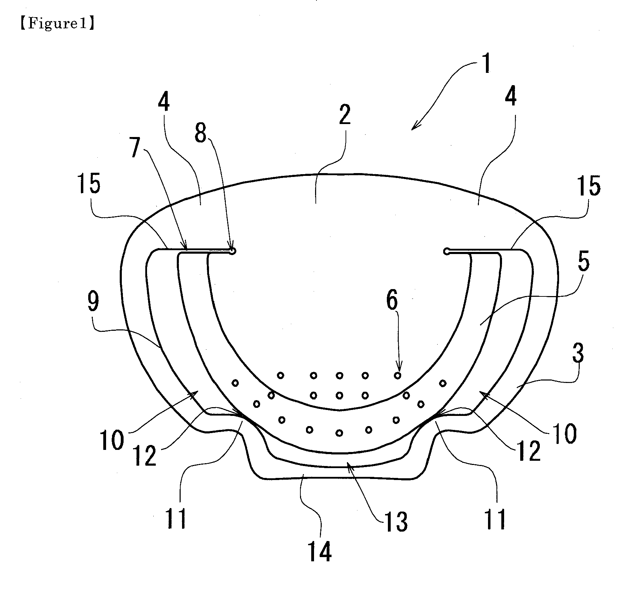

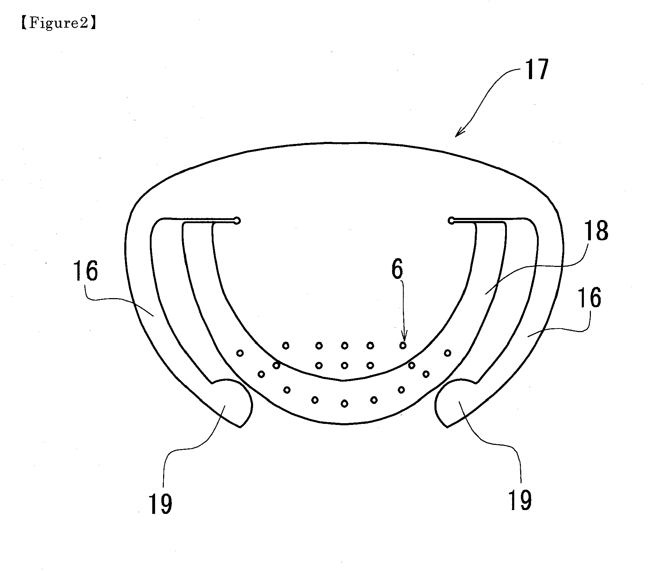

Fig. 1 is a schematic plan view of a container aid utensil to which the present invention is applied. Fig. 2 is a schematic plan view of a dividing utensil having a non-continuous edge portion.

As shown in Fig. 1, the dividing utensil 1 being an example of a container aid utensil or filtration aid utensil to which the present invention is applied includes a base 2 and an outer piece portion 3. Also, the base 2 and the outer piece portion 3 are coupled by a coupling portion 4.

The base 2 is, when attached to a container, located in a space in the interior of the container, and forms a space for filtration in the interior of the container. Also, the base 2 also serves as a part that retains an object such as miso in a space with a container side face. Also, an end portion of the base 2 facing the outer piece portion 3 serves as a base outer edge portion 5.

Also, the base 2 and the base outer edge portion 5 are integrally formed of an elastic member. Also, the base outer edge portion 5 is a part that conforms to an inner side face of a target container. Also, the front and rear faces of the base outer edge portion 5 are formed with a thickness thinner than the thickness of the front and rear faces of other parts of the base 2.

Also, in the base 2 and the base outer edge portion 5, a plurality of circular holes 6 are provided. During a filtering operation, a filtrate is discharged to the outside of the container via the holes 6. Also, the part of the coupling portion 4 to connect the base 2 and the outer piece portion 3 is formed of an elastic material.

Also, in a region near the coupling portion 4 of the base 2, a notch 7 is formed from the side of the base outer edge portion 5 toward the inner side of the base 2. Due to the notch 7, the range of motion of a motion of the base 2 in a direction of the front face side and a direction of the rear face side with respect to the outer piece portion 3 is increased.

Also, a circular end portion hole 8 is formed at an end portion of the notch 7. The end portion hole 8 serves as a part that, when the dividing utensil 1 is being attached to a container, relieves a load on the region of the base 2 in which the notch 7 is provided.

Also, a part of the coupling portion 4 serves as a catch portion 15, and when the dividing utensil 1 is attached to a container, serves as a part that contacts the upper end of a container side face so that the container supports the dividing utensil 1.

Here, it is not always necessary that the base 2 and the base outer edge portion 5 are integrally formed of an elastic member. For example, a structure for which the part corresponding to the base outer edge portion 5 is formed of an elastic material and is joined with a separate base 2 can also be adopted.

Also, the base 2 and the base outer edge portion 5 are not particularly limited in shape, and suffice with ones having a shape that conforms to an inner side face of a target container. As the shape of the base 2 and the base outer edge portion 5, which are used for a container having a rounded side face such as, for example, a columnar pot or a hemispherical bowl, the substantially semicircular shape as shown in Fig. 1 facilitates attachment.

Also, it is not always necessary that the front and rear faces of the base outer edge portion 5 are formed with a thickness thinner than the thickness of the front and rear faces of other parts of the base 2. However, it is preferable that the front and rear faces of the base outer edge portion 5 are formed with a thickness thinner than the thickness of the front and rear faces of other parts of the base 2 for the reason that the modulus of elasticity of the base outer edge portion 5 drops and a clearance becomes unlikely to occur between the base outer edge portion 5 and the container side face.

Also, it is preferable that the front and rear faces of the base outer edge portion 5 are formed with a thickness thinner than the thickness of the front and rear faces of other parts of the base 2 for the reason that a drop in the modulus of elasticity of the base outer edge portion 5 enables attachment to a wider range of side face shapes, which increases the versatility of the dividing utensil 1.

Also, as a structure for reducing the modulus of elasticity of the base outer edge portion 5, it is not necessary to make the thickness of the base outer edge portion 5 fixed, and there may be a structure in which the thickness of the front and rear faces is reduced gradually from the inner side of the base 2 toward the side of the base outer edge portion 5.

Also, the holes 6 are not particularly limited in shape, number, and position of formation, and suffice with ones which are in a size not to allow a filter cake as the object of a filtering operation to flow out during said filtering operation and through which a filtrate efficiently flows. For example, the shape may be a shape such as an angular shape or an indefinite shape other than a circle, and a shape like a honeycomb structure for which identical polygons are arranged can also be adopted. Also, a structure of using filter paper or the like at the same time without changing the size of the holes can also be considered.

Also, it is not always necessary that the notch 7 is formed from the side of the base outer edge portion 5 toward the inner side of the base 2 in a region near the coupling portion 4 of the base 2. However, it is preferable that the notch 7 is formed from the side of the base outer edge portion 5 toward the inner side of the base 2 in a region near the coupling portion 4 of the base 2 for the reason that the range of motion of the base 2 increases, which facilitates attachment of the dividing utensil 1 to a target container and the point that the conformity to a container having an unspecified side face shape increases.

Also, concerning the notch 7, its shape, position of provision, and number are not limited to the content described in Fig. 1. For example, a plurality of notches 7 may be provided in a region of the base outer edge portion 5 that conforms to an inner side face of a container to further increase the conformity to the container having an unspecified side face shape.

Also, it is not always necessary that the circular end portion hole 8 is formed at an end portion of the notch 7. However, it is preferable that the circular end portion hole 8 is formed at an end portion of the notch 7 for the reason that a load on the base 2 according to a change in shape when attaching the dividing utensil 1 to a container is relieved.

Also, the shape of the coupling portion 4 is not limited to the shape having the catch portions 15 shown in Fig. 1, and it suffices that the dividing utensil 1 is in a shape that allows sandwiching a container side face between the base 2 and the outer piece portion 3.

As shown in Fig. 1, an end portion of the outer piece portion 3 facing the base outer edge portion 5 serves as an edge portion 9. Between the base outer edge portion 5 and the edge portion 9, a gap 10 in which a container side face is to be located when the dividing utensil is attached to a container is formed. The edge portion 9 is continuously formed between two coupling portions 4.

Also, in the edge portion 9, two container sandwiching portions 11 where an interval with the base outer edge portion 5 is narrowed are provided. The container sandwiching portions 11 are provided at positions separated at equal distances from a position of the edge portion 9 corresponding to a substantially central portion of the base outer edge portion 5.

Also, the distance of a gap 12 between the base outer edge portion 5 and the container sandwiching portion 11 of the gap 10 is smaller than the distance between the inner and outer sides of a side face of a target container, that is, the thickness of a container side face. At the position of the gap 12, the side face of the container is sandwiched by the base outer edge portion 5 and the container sandwiching portion 11.

Also, of the gap 10, a gap 13 corresponding to a part between the two container sandwiching portions 11 is wider than the gap 12, and formed in a central part of the base outer edge portion 5. Also, a part 14 of the outer piece portion 3 is formed substantially linearly.

Also, the dividing utensil 1 is formed such that its front face and rear face have substantially identical shapes. Also, the base 2 and the outer piece portion 3 are located on an identical plane to provide a structure with which the dividing utensil 1 looks like a thin tabular body when viewed laterally.

Here, it is not always necessary that the edgeportion 9 is continuously formed between two coupling portions 4. However, it is preferable that the edge portion 9 is continuously formed between two coupling portions 4 for the reason that the base 2 and the outer piece portion 3 have a shape in which these are completely connected, which improves the strength of the dividing utensil 1.

As the shape of an edge portion, a shape of, for example, as shown in Fig. 2, an edge portion having a gap in a region corresponding to a central part of a base outer edge portion 18, that is, a non-continuous edge portion 16 can also be adopted. In a dividing utensil 17 shown in Fig. 2, a container sandwiching portion 19 where an interval with the base outer edge portion 18 is narrowed is formed in an end portion of the edge portion 16.

The dividing utensil 17 has a gap in a region corresponding to a central part of the base outer edge portion 18, and therefore has a structure that facilitates attachment of the utensil to a container side face from the part of the container sandwiching portion 19.

Regarding the structure of the dividing utensil 1 shown in Fig. 1, the container sandwiching portions 11 where an interval of the edge portion 9 with the base outer edge portion 5 is narrowed are not particularly limited in the number and position of formation. It suffices that a region where the distance between the base outer edge portion 5 and the container sandwiching portion 11 is made smaller than the distance between the inner and outer sides of a side face of a target container is formed in at least a part on the edge portion. However, it is preferable that the container sandwiching portions 11 are provided at positions separated at equal distances from a position of the edge portion 9 corresponding to a substantially central portion of the base outer edge portion 5 for the reason that a gap to be formed in a central part of the base outer edge portion 5 is wide, which makes attachment of the dividing utensil 1 to a container easy.

Also, it is not always necessary that a part 14 of the outer piece portion 3 is formed substantially linearly. However, it is preferable that a part 14 of the outer piece portion 3 is formed substantially linearly for the reason that it becomes possible, when the container is inclined substantially vertically with respect to a floor during a filtering operation, to support the container by the part 14 of the outer piece portion 3. In addition, this point will be described later in a method for using the dividing utensil 1.

Also, it is not always necessary that the dividing utensil 1 is formed such that its front face and rear face have substantially identical shapes. However, it is preferable that the dividing utensil 1 is formed such that its front face and rear face have substantially identical shapes for the reason that both faces become usable and the point that the durability of the dividing utensil 1 can be improved.

Also, it is not always necessary that the base 2 and the outer piece portion 3 are located on an identical plane. However, it is preferable that the base 2 and the outer piece portion 3 are located on an identical plane for the reason that the dividing utensil 1 is reduced in volume, which becomes convenient for carrying and the point that cleaning and storage after use are facilitated.

Subsequently, another embodiment of a container aid utensil or filtration aid utensil to which the present invention is applied will be described.

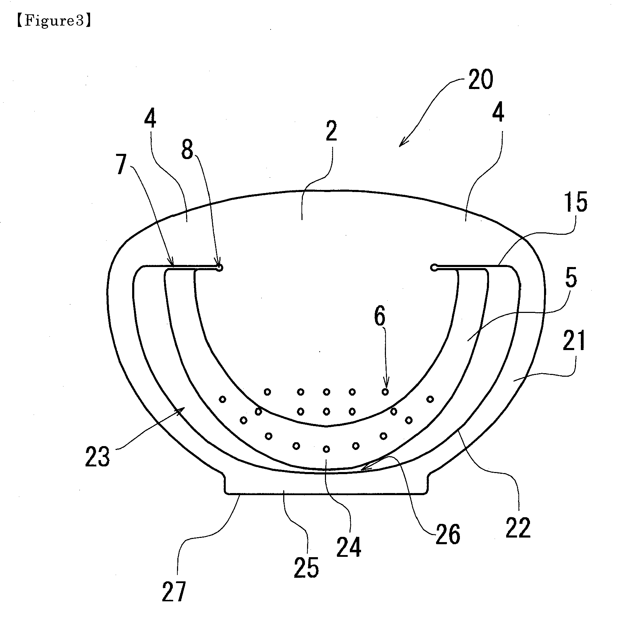

Fig. 3 is a schematic plan view of a dividing utensil in which a substantially central portion of a base outer edge portion and an edge portion are approached.

As shown in Fig. 3, the dividing utensil 20 includes a base 2 and an outer piece portion 21. Also, the base 2 and the outer piece portion 21 are connected by a coupling portion 4. In addition, the base 2, the coupling portion 4, a base outer edge portion 5, holes 6, a notch 7, an end portion hole 8, and a catch portion 15 are the same as the structures of the dividing utensil 1, and therefore, description thereof will be omitted.

An end portion of the outer piece portion 21 facing the base outer edge portion 5 serves as an edge portion 22. Between the base outer edge portion 5 and the edge portion 22, a gap 23 in which a container side face is to be located when the dividing utensil is attached to a container is formed. The edge portion 22 is continuously formed between two coupling portions 4.

Also, a container sandwiching portion 25 where an interval with the base outer edge portion 5 is narrowed is provided in a part of the edge portion 22 corresponding to a substantially central portion 24 of the base outer edge portion 5.

Also, the distance of a gap 26 between the base outer edge portion 5 and the container sandwiching portion 25 of the gap 23 is smaller than the distance between the inner and outer sides of a side face of a target container, that is, the thickness of a container side face. At the position of the gap 26, the side face of the container is sandwiched by the base outer edge portion 5 and the container sandwiching portion 25. Also, a part 27 of the outer piece portion 21 is formed substantially linearly.

Also, the dividing utensil 20 is formed such that its front face and rear facehave substantially identical shapes. Also, the base 2 and the outer piece portion 21 are located on an identical plane to provide a structure with which the dividing utensil 20 looks like a thin tabular body when viewed laterally.

Like the dividing utensil 20, a structure of sandwiching a side face of a target container at the position of the substantially central portion 24 of the base outer edge portion 5 is also considered as an example of a container aid utensil or filtration aid utensil to which the present invention is applied.

Hereinafter, a method for using a container aid utensil or filtration aid utensil to which the present invention is applied will be described while referring to the drawings, and be used for understanding of the present invention.

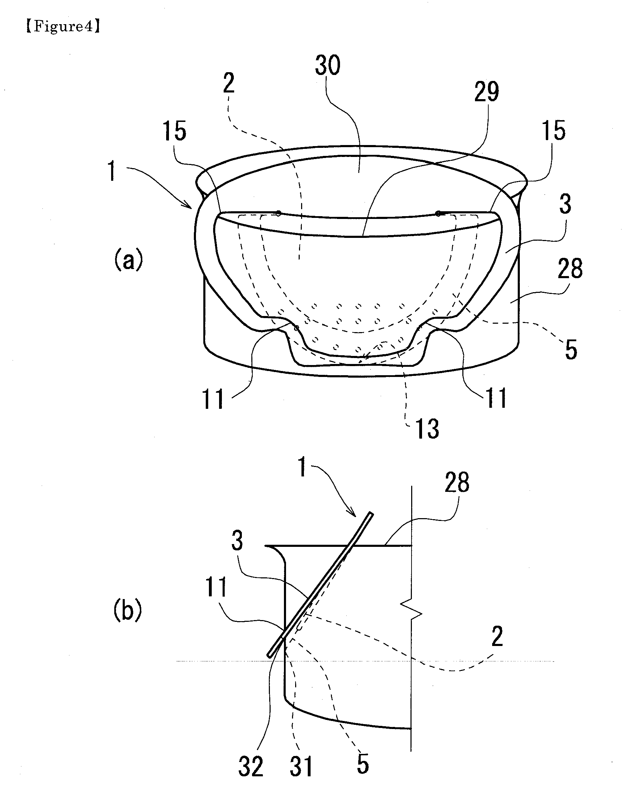

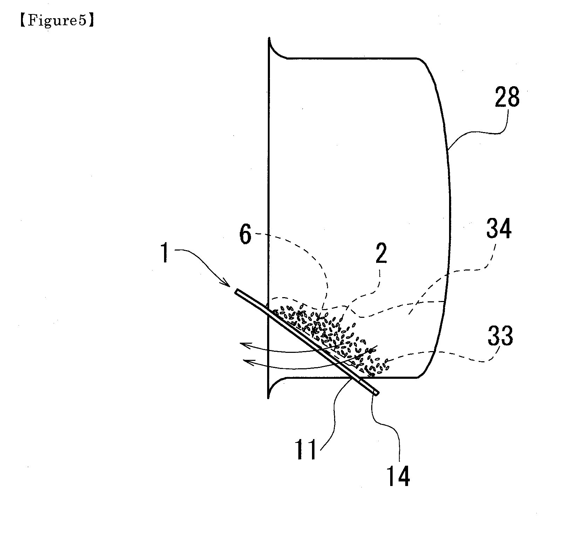

Fig. 4(a) is a schematic view of a state in which the dividing utensil 1 is attached to a container and Fig. 4(b) is a schematic sectional view of that state viewed laterally. Fig. 5 is a schematic sectional view of a state in which the container is inclined during a filtering operation viewed laterally.

As shown in Fig. 4(a), the dividing utensil 1 is attached to a substantially columnar container 28.

First, for attaching the dividing utensil 1 to the container 28, a vicinity 30 of an upper portion of the base 2 is held, and a part of a side-face upper end 29 of the container 28 is combined with the position of the gap 13. At this time, the base outer edge portion 5 at a position corresponding to the gap 13 is brought into contact with an inner side face of the container 28. Simultaneously, one of the container sandwiching portions 11 is brought into contact with an outer side face of the container 28.

Next, by holding the vicinity 30 of an upper portion of the base 2 and pushing the base 2 into the interior of the container 28, a state in which the base outer edge portion 5 conforms to the inner side face of the container 28 is brought about. Also, the two container sandwiching portions 11 abut against the outer side face of the container 28. Also, on the side-face upper end 29 of the container 28, the catch portion 15 is caught.

Attachment of the dividing utensil 1 is completed by the procedure described above. By the operation, the side face of the container 28 is brought into a state of being sandwiched by the base outer edge portion 5 and the container sandwiching portion 11. Also, a state in which the base outer edge portion 5 conforms to the inner side face of the container 28 is brought about, which results in a structure having substantially no gap between the inner side face and the base 2. In addition, the operation during attachment can be simply performed even by one hand.

Also, as shown in Fig. 4(b), the space in the interior of the container 28 is divided by the base 2, so that a space for filtration is formed.

Also, when the base 2 is pushed into the interior of the container 28, a state is brought about in which a position 31 where the base outer edge portion 5 contacts the inner side face and a position 32 where the container sandwiching portion 11 contacts the outer side face are different. That is, positional misalignment occurs in the base outer edge portion 5 and the container sandwiching portion 11, which are located on an identical plane in a state before attachment.

At this time, a restoring force when the base 2 intends to return to an original shape from the state with positional misalignment and a restoring force of an elastic member of the coupling portion 4 act, and the side face of the container 28 is sandwiched by these restoring forces.

Also, as in the foregoing, Fig. 5 shows a state during a filtering operation.

As shown in Fig. 5, in the interior of the container 28, there is rice 33 being a filter cake and water 34 being a filtrate as objects of the filtering operation. Also, the rice 33 is placed in, of the space in the interior of the container 28, a space between a bottom face of the container 28 and the base 2.

Also, during the filtering operation, the container 28 attached with the dividing utensil 1 is inclined ina direction of the container sandwiching portions 11 to perform filtration. With the inclination of the container 28, the rice 33 cannot pass through the plurality of holes 6 provided in the base 2, and is retained by the base 2.

On the other hand, the water 34 can pass through the holes 6, and flows to the side of an opening portion of the container 28 through the base 2, and is discharged from the container 28.

At this time, as a result of the rice 33 being retained by the base 2, the weight of the rice 33 acts as a pressing force, so that the base 2 is pressed to the opening portion side of the container 28. As a result, the force to sandwich the side face of the container 28 increases, and the dividing utensil 1 becomes unlikely to come off from the container 28 during the filtering operation.

Also, in Fig. 5, the container 28 is inclined to a position where it becomes substantially vertical with respect to a floor (not shown), which brings about a state in which the part 14 of the outer piece portion 3 formed substantially linearly supports the container 28. Supporting the container 28 by the part 14 of the outer piece portion 3 and the upper end portion of the container side face makes it possible to secure the inclined state without using a hand. In addition, it is also possible to secure the inclined state of the container 28 by disposing an arbitrary object between the container 28 and the floor.

Also, for detachment of the dividing utensil 1 from the container 28, detachment can be performed by holding a vicinity of the part 14 of the outer piece portion 3 and moving the same upward. As above, attachment and detachment of the dividing utensil 1 can be easily performed without touching the container 28 and filtering objects by hand.

Here, a method for attaching the dividing utensil 1 to the container 28 is not limited to a particular method, and suffices with one that allows sandwiching the side face of the container 28 by the base outer edge portion 5 that conforms to the inner side face of the container 28 and the outer piece portion 3 that is in contact with the outer side face of the container 28.

Also, the filtering objects are not limited to rice and water, and the present invention can also be used for draining hot water from noodles. Also, the present invention can be used for not only cooking uses but also industrial uses. For example, when performing cleaning in an oil drum or the like by immersing machine parts into a cleaning fluid, a dividing utensil having been made to respond in size and shape can also be used for separation of the parts after cleaning from the cleaning fluid.

Also, here, a description has been given of a method for use limited to a filtering operation, but the present invention is not limited the use of a filtering operation. Although this has been mentioned above, for example, the space in the interior of a container 28 containing hot water is divided by the base 2, and miso is placed in a space between the opening portion side of the container 28 and the base 2 to make the base 2 retain the miso. This makes it also possible to serve as a miso strainer.

Also, as described above, in the case of a use for placing an object in the space between the opening portion side of the container 28 and the base 2, it can also be considered to change the distance between the base 2 and the outer piece portion 3 so as to make the position where the base outer edge portion 5 contacts the side face of the container 28 and the position where the container sandwiching portion 11 contacts the same opposite to the positional relationship shown in Fig. 4(b).

In this case, in the side face of the container 28, the position where the container sandwiching portion 11 contacts becomes lower than the position where the base outer edge portion 5 contacts. The side face of the container 28 is sandwiched by the base outer edge portion 5 and the container sandwiching portion 11, and the weight of an object retained by the base 2 serves as a pressing force to increase the sandwiching force.

Also, a container aid utensil or filtration aid utensil to which the present invention is applied can also be used for a target container having a substantially prism shape or the like.

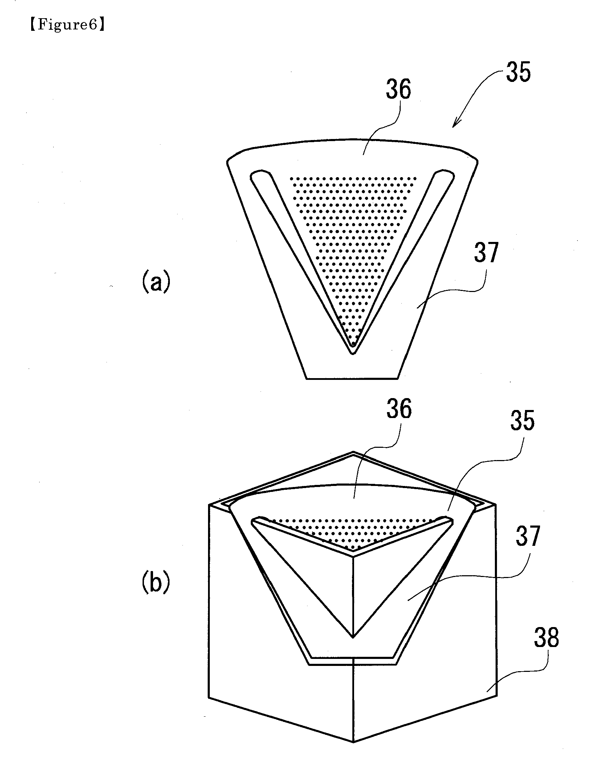

Fig. 6(a) is a schematic plan view showing a dividing utensil for a substantially prism-shaped container and Fig. 6 (b) is a schematic view showing an attached state of the dividing utensil.

As shown in Fig. 6(a), the dividing utensil 35 has a substantially triangular-shaped base 36 and an outer piece portion 37 being in a shape pertaining thereto. As shown in Fig. 6(b), it is possible to attach the dividing utensil 35 to the substantially prism-shaped container 38 by pushing the base 36 into the interior of the container 38.

Also, when a container aid utensil or filtration aid utensil to which the present invention is applied is used as an attachment dedicated to a target container, it is also possible to attach the same by making the container made to respond in shape.

Also, still another embodiment of a container aid utensil or filtration aid utensil to which the present invention is applied will be described.

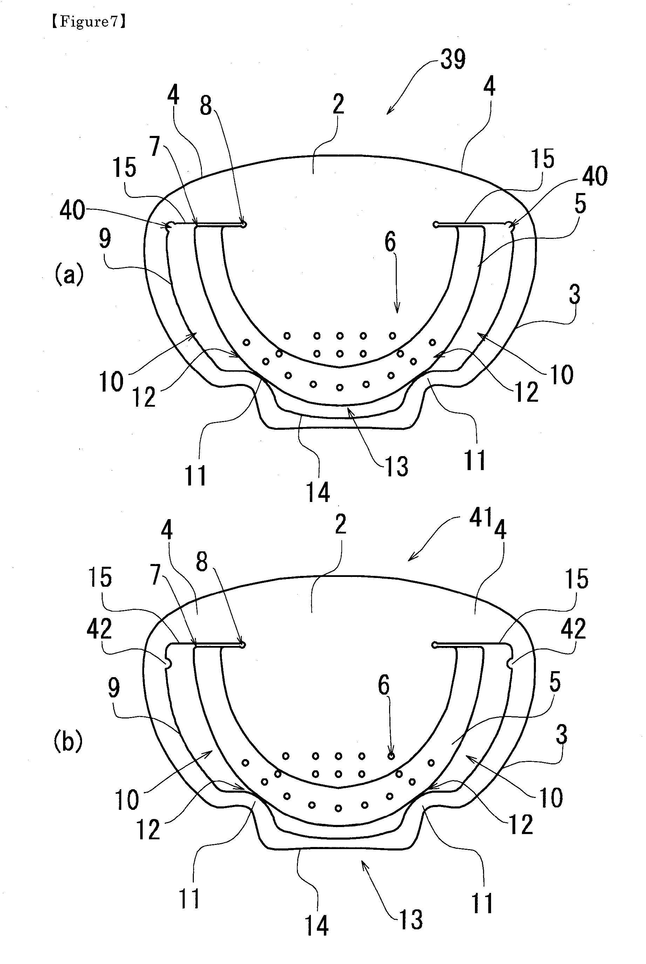

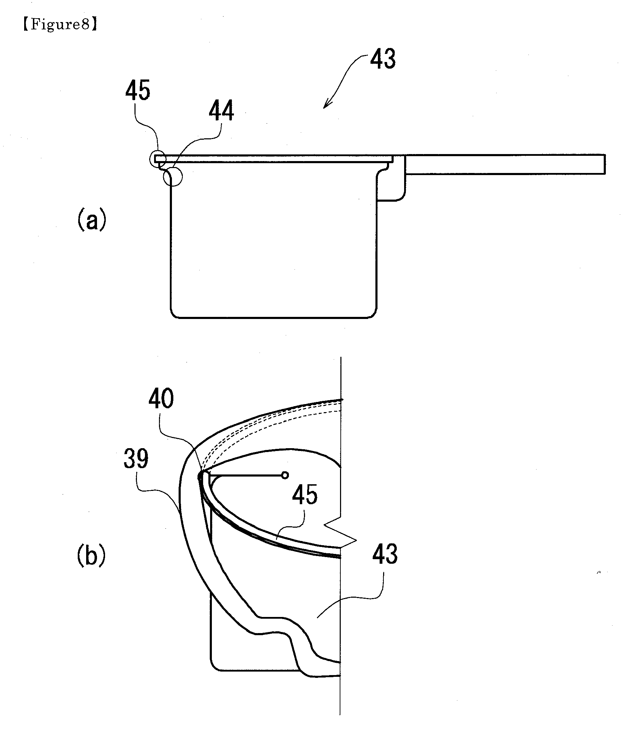

Fig. 7 (a) is a schematic plan view of a dividing utensil formed at its part to be caught with dimples and Fig. 7(b) is a schematic plan view of a dividing utensil formed at its part to be caught with projecting portions. Fig. 8(a) is a schematic view showing a pot having a stepped rim at a side-face upper end and Fig. 8 (b) is a schematic view showing a state in which a dividing utensil formed with dimples is attached.

The dividing utensil 39 shown in Fig. 7(b) is formed with dimples 40 in the right and left catch portions 15. Also, the dividing tool 41 shown in Fig. 7(b) is formed with projecting portions 42 in the right and left catchportions 15. In addition, the structures other than the dimples 40 and the projecting portions 42 are the same as the structures of the foregoing dividing utensil 1, and therefore, description thereof will be omitted.

The dimples 40 and the projecting portions 42 are structures that are, when respective diving utensils are attached to target containers, for being caught on the upper end of a container side face to stabilize the attached state. These dividing utensils can be used for, for example, a pot 43 having such a structure as shown in Fig. 8(a).

The pot 43 is in a shape having a rim 45 with a step 44 at its upper end part. The dimples 40 of the dividing utensil 39 are fitted with the rim 45 of the pot 43, and with the step 44, the projecting portions 42 of the dividing utensil 41 are fitted.

As shown in Fig. 8(b), when the dividing utensil 39 is attached to the pan 43, the rim 45 is fitted with regions of the dimples 40. The pot 43 is thereby grasped by the part of the dimples 40 during filtration, and the dividing utensil 39 becomes unlikely to come off.

Also, although not illustrated, when the dividing utensil 41 is attached to the pot 43, the projecting portions 42 are caught on the part of the step 44. The pot 43 is still grasped at this part by the part of the projecting portions 42 during filtration, and the dividing utensil 39 becomes unlikely to come of f. In addition, with the structure provided with the projecting portions 42, the area of the substantial part is increased, so that the strength when the dividing utensil is attached is improved.

By thus providing dimples or projecting portions in the catch portions, the stability of the dividing utensil during filtration can be yet further increased.

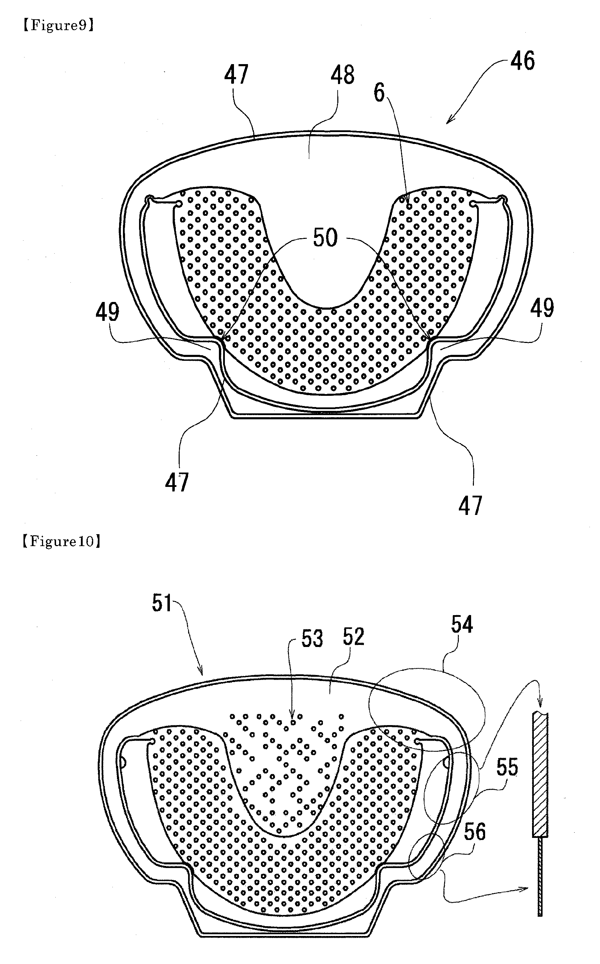

Also, as another embodiment, a dividing utensil 46 shown in Fig. 9 exists. The diving utensil 46 has a larger number of holes 6 for filtration than that of the foregoing dividing utensil 1. Also, ribs 47 are provided to provide a structure improved in strength. Further, the foregoing dimples 40 are also provided.

Also, in the dividing utensil 46, minute indented portions 50 are provided at parts, of a base 48, corresponding to container sandwiching portions 49. The container sandwiching portions 49 can be projected to the side of the base 48 by the indented portions 50. A positional gap between the base 48 and an outer piece portion having the container sandwiching portions 49 when the dividing utensil 46 is attached to a target container is thereby increased, and the force to sandwich the container can be increased. In addition, it is preferable that the size of the indentation of the indented portions 50, that is, the distance of entry to the inside of the base 48 is not more than the diameter of the hole 6. This is because if the size of the indentation is larger than the diameter of the hole 6, a filter cake as the object may possibly flow out from the indented portions 50.

As above, in the dividing utensil 46, the indented portions 50 are provided to increase the force to sandwich a container.

Also, in a dividing utensil 51 shown in Fig. 10, a plurality of holes 53 for washing a filter cake are provided in an upper part of a base 52. The region formed with the holes 53 for washing a filter cake is a region to which a filter cake is likely to stick during filtration. For example, when water is filtered using the dividing utensil 51 for a rice washing operation, rice may stick thereto when water is drained by inclination.

At this time, by making tap water run toward the holes 53 for washing a filter cake stuck with rice with the container kept inclined, the rice returns to the interior of the container while the water runs in an outside direction of the container via the holes 53 for washing a filter cake. Thus, a structure capable of reducing the trouble during filtration is provided.

Also, the dividing utensil 51 has a structure of which regions circled by an ellipse 54 and an ellipse 55 and regions on an opposite side corresponding to those parts, that is, parts that are right-left symmetrical in a plan view are thicker than other parts. Making the parts thicker increases the sandwiching force when the dividing utensil is attached to a container. In addition, a sectional view showing a region of the ellipse 55 and an ellipse 56 being another part is shown in Fig. 10 as an example showing a difference in thickness.

In the dividing utensil 51, thus increasing the thickness in part increases the force to sandwich a container.

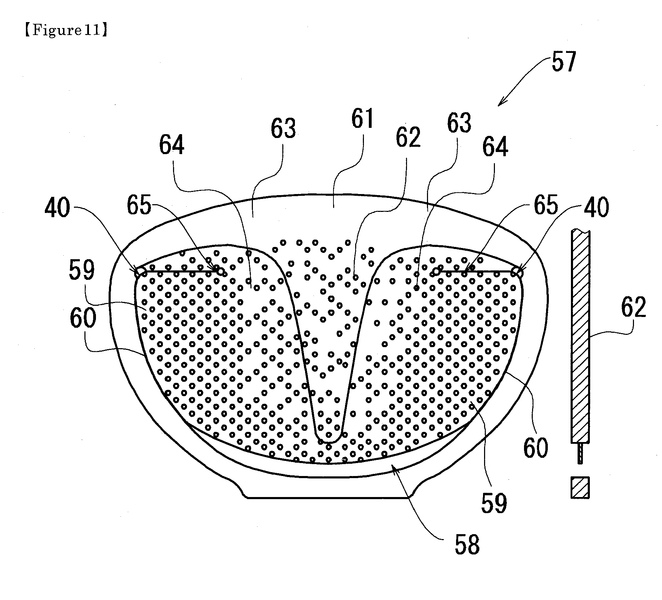

Also, a dividing utensil 57 shown in Fig. 11 has a structure of which a base outer edge portion 59 and an edge portion 60 are almost in contact except a region of a gap 58. Also, a base 61 is formed such that its central part 62 and a region 63 at its upper portion side are thick, and a region 64 other than those including a base outer edge portion 59 is thin and bendable. Inaddition, a sectional view at the position of the central part 62 is shown in Fig. 11 as an example showing a difference in thickness.

The dividing utensil 57, because of being bendable in the other region 64 including the base outer edge portion 59, has a structure that allows attachment to a container side face even when there is no such appropriate gap between the base outer edge portion and edge portion as in the foregoing dividing utensil 1. Also, the base 61, because of being thick in the central part 62 and the region 63 at the upper portion side, provides strength and stability when the dividing utensil is attached.

Also, for the dividing utensil 57, slightly deep notches 65 are provided in the base 61. Therefore, the range of motion of the base 2 is increased to provide a structure having a high conformity to the shape of a container side face, in conjunction with the region 64 bending.

Also, for the dividing utensil 57, dimple 40 as in the foregoing are provided. The dimple 40 is fitted with the upper end of a container side face to increase stability when the dividing utensil is attached. Because the dividing utensil 57 has a shape in which a wide region of the base 61 is thin, the dimple 40 greatly contribute to a sandwiching force when the dividing utensil is attached and during filtration.

The dividing utensil 57 is thus improved in conformity with a container side face.

As above, the container aid utensil, filtration aid utensil, and filtering method to which the present invention is applied allow forming a sufficient filtering space in the interior of a target container. Also, outflow of a filter cake can be easily prevented.

Also, the container aid utensil and filtration aid utensil to which the present invention is applied are unlikely to come off even during a filtering operation and the like, and can respond to a large quantity of filtering objects. Also, the container aid utensil and filtration aid utensil to which the present invention is applied are also adaptable to a container having an unspecified shape, and have a high versatility.

Also, the utensil itself is small in volume, and therefore easy to be carried, and is also easily used for, for example, a cooking operation and the like outdoors. Also, there is also an advantage that the time and effort involved in cleaning and storage after use is small. Also, providing a structure in which both faces are usable can increase durability.

As above, the container aid utensil to which the present invention is applied allows efficiently performing a filtering operation and the like and is easy to use.

Also, the filtration aid utensil to which the present invention is applied allows efficiently performing a filtering operation and the like and is easy to use.

Also, the filtering method to which the present invention is applied allows efficiently performing a filtering operation and the like and is easy to use.

### Reference Sings List

1 Dividing utensil
2 Base
3 Outer piece portion
4 Coupling portion
5 Base outer edge portion
6 Hole
7 Notch
8 End portion hole
9 Edge portion
10 Gap
11 Container sandwiching portion
12 Gap
13 Gap
14 A part of outer piece portion
15 Catch portion
16 Edge portion
17 Dividing utensil
18 Base outer edge portion
19 Container sandwiching portion
20 Dividing utensil
21 Outer piece portion
22 Edge portion
23 Gap
24 Substantially central portion of base outer edge portion
25 Container sandwiching portion
26 Gap
27 A part of outer piece portion
28 Container
29 Side-face upper end of container
30 Vicinity of upper portion of base
31 Position where base outer edge portion contacts inner side face
32 Position where container portion contacts outer side face
33 Rice
34 Water
35 Dividing utensil
36 Base
37 Outer piece portion
38 Container
39 Dividing utensil
40 Dimple
41 Dividing utensil
42 Projecting portion
43 Pot
44 Step
45 Rim
46 Dividing utensil
47 Rib
48 Base
49 Container sandwiching portion
50 Indented portion
51 Dividing utensil
52 Base
53 Hole for washing filter cake
54 Ellipse
55 Ellipse
56 Ellipse
57 Dividing utensil
58 Gap
59 Base outer edge portion
60 Edge portion
61 Base
62 Central part
63 Region at upper base side
64 Region

## Claims

1. A container aid utensil comprising:
a first member having an outer edge portion being in a shape that conforms to an inner side face of a target container and formed with a hole;
a second member coupled to the first member, extending at least inpart in a direction of a substantially central portion of the outer edge portion, and having an edge portion facing at least a part of the outer edge portion and being approachable to and separable from the outer edge portion; and
a sandwiching portion located in the edge portion, formed with a distance with the outer edge portion shorter than a distance between the inner side face of the target container and an outer side face of an opposite side of the inner side face.

2. The container aid utensil according to claim 1, wherein
the first member is disposed inclined from the inner side face of the target container toward a central side and a rim portion side of the target container.

3. The container aid utensil according to claim 1 or claim 2, wherein
the outer edge portion, a peripheral region of the outer edge portion, and a region where the first member and the second member are coupled are formed of an elastic material.

4. The container aid utensil according to claim 1, claim 2, or claim 3, wherein
the edge portion has a dimple portion formed in a direction of an opposite side to the first member or a projecting portion projecting in a direction of the first member side in a region that is in contact with an upper end of a side face of the target container.

5. The container aid utensil according to claim 1, claim 2, claim 3, or claim 4, wherein
the second member is formed at an interval from the outer edge portion.

6. The container aid utensil according to claim 1, claim 2, claim 3, claim 4, or claim 5, wherein
the second member is coupled to the first member with the edge portion and the outer edge portion being continuous, and a closed gap portion is formed between the edge portion and the outer edge portion.

7. The container aid utensil according to claim 1, claim 2, claim 3, claim 4, claim 5, or claim 6, wherein
the first member is formed with a distance between one face of the outer edge portion of the first member and the other face being an opposite side of the one face narrower than a distance between one face of an inside region of the outer edge portion of the first member and the other face being an opposite side of the one face.

8. The container aid utensil according to claim 1, claim 2, claim 3, claim 4, claim 5, claim 6, or claim 7, wherein
the secondmember is coupled with the first member, located on substantially an identical plane to that of the first member.

9. The container aid utensil according to claim 1, claim 2, claim 3, claim 4, claim 5, claim 6, claim 7, or claim 8, wherein
the first member, the second member, and the sandwiching portion are formed to be substantially identical in one face and the other face being an opposite side of the one face.

10. The container aid utensil according to claim 1, claim 2, claim 3, claim 4, claim 5, claim 6, claim 7, claim 8, or claim 9, wherein
the first member is formed with a notch from near a position where the first member is coupled with the second member into a direction of an opposite side to the second member.

11. The container aid utensil according to claim 1, claim 2, claim 3, or claim 4, wherein
the first member is formed to be bendable from a substantially central region being a starting point, and
at least the part of the outer edge portion is located in contact with the edge portion facing the same.

12. The container aid utensil according to claim 1, claim 2, claim 3, or claim 4, wherein
the second member is coupled to facing regions on the first member, and has a gap between end portions thereof, and
the sandwiching portion is formed in the end portion of the second member.

13. A filtration aid utensil to be used for a filtering operation that is performed with a target container inclined, comprising:
an elastic base having an outer edge portion being in a shape that conforms to an inner side face of a target container and formed with a large number of holes; and
an elastic member having an edge portion facing the outer edge portion of the elastic base and coupled to the elastic base with both ends of the outer edge portion and both ends of the edge portion being continuous to form a closed gap portion between the outer edge portion and the edge portion, and further, with a distance between a substantially central portion of the outer edge portion and a substantially central portion of the edge portion shorter than a distance between the inner side face of the target container and an outer side face of an opposite side of the inner side face.

14. The filtration aid utensil according to claim 13 , wherein
the elastic base has an inclined face where a distance between one face in a vicinity of the outer edge portion of the elastic base and the other face being an opposite side of the one face is narrowed toward the outer edge portion.

15. A container aid utensil comprising:
a first member having an outer edge portion being in a shape that conforms to an inner side face of a target container and formed with a hole, to be disposed on an inner side of the target container;
a second member coupled to the first member, having an edge portion facing at least a part of the outer edge portion and being approachable to and separable from the outer edge portion; and
a sandwiching portion located in the edge portion, formed with a distance with the outer edge portion shorter than a distance between the inner side face of the target container and an outer side face of an opposite side of the inner side face.

16. A filtering method comprising a step of a filtration aid utensil being attached by sandwiching a first member having an outer edge portion being in a shape that conforms to an inner side face of a target container and formed with a hole at an inner side that conforms to the inner side face of the container and an outer side facing the inner side, disposed with a second member coupled to the first member, extending at least in part in a direction of a substantially central portion of the outer edge portion, and having an edge portion facing at least a part of the outer edgeportion and being approachable to and separable from the outer edge portion, and inclining the target container in which a filtrate and a filter cake placed between the first member and a container bottom face are placed.
